(19) Europäisches Patentamt
European Patent Office
Office européen des brevets

(11) Veröffentlichungsnummer: **0 232 777 B1**

(12) **EUROPÄISCHE PATENTSCHRIFT**

(45) Veröffentlichungstag der Patentschrift: **04.12.91**

(51) Int. Cl.$^5$: **B29C 47/00**, B32B 7/02

(21) Anmeldenummer: **87100980.9**

(22) Anmeldetag: **24.01.87**

(54) **Verfahren zur Herstellung von Teilen aus thermotropen flüssigkristallinen Kunststoffen mit definierter Orientierung der LC-Polymer-Moleküle sowie die so hergestellten Teile.**

(30) Priorität: **08.02.86 DE 3603995**

(43) Veröffentlichungstag der Anmeldung:
**19.08.87 Patentblatt 87/34**

(45) Bekanntmachung des Hinweises auf die Patenterteilung:
**04.12.91 Patentblatt 91/49**

(84) Benannte Vertragsstaaten:
**BE DE ES FR GB IT NL**

(56) Entgegenhaltungen:
**EP-A- 0 044 147**
**EP-A- 0 045 575**
**EP-A- 0 072 210**
**EP-A- 0 113 117**
**GB-A- 918 910**
**US-A- 4 333 907**
**US-A- 4 460 735**

(73) Patentinhaber: **BAYER AG**
**W-5090 Leverkusen 1 Bayerwerk(DE)**

(72) Erfinder: **Dicke, Hans-Rudolf, Dr.**
**Bodelschwinghstrasse 16**
**W-4150 Krefeld(DE)**
Erfinder: **Wendorff, Joachim, Dr.**
**Reiherstrasse 18**
**W-6085 Nauheim(DE)**

EP 0 232 777 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Teilen aus thermotropen flüssig-kristallinen Kunststoffen mit definierter Orientierung der LC-Polymermoleküle in mindestens zwei voneinander unabhängigen Vorzugsrichtungen, indem der thermoplastische Massestrom durch eine Düse extrudiert wird und die LC-Polymermoleküle mittels der über die Form der Begrenzungsflächen der Düse aufgeprägten Kräfte ausgerichtet werden. Die Erfindung betrifft außerdem die so hergestellten Teile.

Flüssig-kristalline Kunststoffe bestehen aus starren, sogenannten mesogenen, Struktureinheiten und dies entweder ausschließlich oder in Kombination mit flexiblen Struktureinheiten, den sogenannten Spacern. Die flüssig-kristalline Schmelze ist gekennzeichnet durch eine spontane Selbstorganisation der Kettenmoleküle dergestalt, daß diese in Mikrodomänen parallel zueinander ausgerichtet sind. Die Vorzugsrichtungen der einzelnen Domänen sind jedoch makroskopisch statistisch oder weitgehend statistisch verteilt, wenn die Schmelze durch Aufheizen aus Granulat erzeugt wird.

Durch geeignete Scher- und Dehnströmungen lassen sich Abweichungen von einer makroskopisch isotropen Orientierung erreichen. So ist bekannt, daß eine einachsige Verformung der Schmelze zu einer uniachsialen Orientierungsordung führen kann. Formkörper, die nach solchen Verfahren hergestellt wurden, besitzen aufgrund dieser Vorzugsorientierung hervorragende mechanische Festigkeiten und Steifigkeiten. Allerdings sind diese guten mechanischen Eigenschaften nur in der Richtung zu beobachten, in der die Kettenmoleküle ausgerichtet sind. Senkrecht zu dieser Richtung ist das Eigenschaftsniveau im allgemeinen gering. Es kann sogar häufig ein Aufspleizen des Formkörpers beobachtet werden, wenn mechanische Kräfte senkrecht zur Vorzugsorientierung angreifen.

In neuerer Zeit werden nun Verfahren beschrieben, die die Herstellung von Formkörpern aus flüssigkristallinen Kunststoffen mit biachsialer Orientierungsverteilung gestatten.

US 4 333 907 beschreibt die Herstellung von biachsial orientierten Filmen aus vollaromatischen flüssigkristallinen Polymeren. Nach dem dort beschriebenen Verfahren wird zunächst ein Film mit uniachsialer Orientierung der Moleküle erzeugt. Durch nachträgliches Recken des Films senkrecht zur Orientierungsrichtung bei einer Temperatur oberhalb des Schmelzpunktes des Kunststoffes wird dann eine biachsiale Orientierung erhalten. Dieses Verfahren ist sehr aufwendig und erlaubt außerdem nicht die gezielte Steuerung der Orientierungsverteilung.

US 4 362 777 beschreibt die Herstellung von Platten aus Fasern auf Basis thermotroper flüssigkristalliner Kunststoffe. Dabei werden zunächst hochfeste Fasern aus diesen Kunststoffen hergestellt. Diese Fasern werden dann mit speziellen Substanzen beschichtet und bei hoher Temperatur und unter hohem Druck zu Platten gepreßt. Nachteilig ist hier ebenfalls die aufwendige mehrstufige Herstellung. Auch die resultierende faserartige und wenig kompakte Struktur des Formkörpers muß als Nachteil dieses Verfahrens angesehen werden.

Aufgabe der Erfindung ist es, ein Verfahren zur Herstellung von Teilen, wie Filme, Platten und Profile, aus thermotropen, flüssigkristallinen Kunststoffen zu finden, welches erlaubt, durch Extrusion in einem Arbeitsgang die Kettenmoleküle des zu verarbeitenden Kunststoffes in beliebiger uni-, bi- oder mehrachsialer Richtung zu orientieren, um dadurch die Steifigkeit bzw. Festigkeit in gegebenen Richtungen bzw. andere physikalische Stoffeigenschaften zu verbessern.

Die Aufgabe wird erfindungsgemäß dadurch gelöst, daß sich die geometrische Gestalt geeigneter Begrenzungsflächen und die räumliche Anordnung dieser Begrenzungsflächen näherungsweise durch analytische Funktionen repräsentieren lassen, so daß eine einfache Herstellung solcher Düsen über numerisch gesteuerte Werkzeugmaschinen möglich wird. Über die Auswahl geeigneter analytischer Funktionen und über die Auswahl der Achsenrichtungen Y und Z relativ zur Extrusionsrichtung X wird erreicht, daß im Formkörper vorgegebene Orientierungen entlang vorgegebenen Achsen auftreten.

Die Orientierung entlang der Extrusionsrichtung ist bestimmt durch die Variation des Querschnitts Q (x) der Düse beim Fortschreiten in Extrusionsrichtung X. Eine Abnahme von Q(x) mit wachsendem x führt zu einer Orientierung der Kettenmoleküle in x-Richtung, eine Zunahme von Q(x) zu einer bevorzugten Orientierung senkrecht zur Extrusionsrichtung. Werden die linearen Dimensionen der Querschnittsabmessungen entlang der Achsen Y und Z mit b (x) und c (x) bezeichnet, so gilt:

$$Q(x) = g \cdot b(x) \cdot c(x)$$

wobei g ein in diesem Zusammenhang unbedeutender geometrischer Faktor ist. Für ein rundes kreisförmiges Profil der Düse beträgt er:

$b(x) = r(x), c(x) = r(x), g = \pi$

und für ein rechteckiges Profil:

g = 1.

Es wurde gefunden, daß die Funktion Q(x) als Funktion von x anwachsen, abfallen oder konstant bleiben kann, je nach gewünschtem Orientierungszustand. Als geeignete Funktionen erweisen sich z.B.

| | |
|---|---|
| 1) $Q(x) = Ax^n + B$ | negative Dehnströmung in x-Richtung |
| oder $Q^{-1}(x) = Ax^n + B$ | positive Dehnströmung in x-Richtung |
| mit n = 0 bis 10 | |

| | |
|---|---|
| 2) $Q(x) = B \exp(+ Ax)$ | + negative Dehnströmung |
| $Q^{-1}(x) = B \exp(+ Ax)$ | - positive Dehnströmung |

Durch die Auswahl geeigneter Funktionen b(x) und c(x) wird erreicht, daß entlang der ausgewählten Achsen eine definierte Dehnströmung bei der Extrusion auftritt und damit eine definierte Orientierung im Formkörper entlang dieser Richtungen. Als geeignete Funktionen haben sich z.B. erwiesen:

| | | | |
|---|---|---|---|
| $b(x) = \sqrt{Cx+D}$ | | $b(x)^{-1} = \sqrt{Cx+D}$ | |
| $b(x) = \ln(Cx+D)$ | für positive Dehnströmung in Y-Richtung | $b(x)^{-1} = \ln(Cx+D)$ | für negative Dehnrichtung in Y-Strömung |
| $b(x) = D \exp(Cx)$ | | $b(x)^{-1} = D\exp(Cx)$ | |

für c(x) gilt stets c(x) = Q(x)/b(x).

Es wurde nun gefunden, daß die Ketten im Formkörper nach der Extrusion in den Richtungen bevorzugt liegen, entlang der die Dehnung der Schmelze beim Durchlaufen der Düse überwiegend positiv war. Eine überwiegend negative Dehnströmung (Stauchung) entlang einer vorgegebenen Achse resultierte dagegen in einer bevorzugten Orientierung der Kettenmoleküle senkrecht zu dieser Achse. Der Grad der Orientierung hängt dabei von dem Ausmaß der Dehnströmung ab. Dieses ist durch die Form der analytischen Funktion in guter Näherung charakterisierbar sowie durch die Größe der in den analytischen Funktionen auftretenden Konstanten (A, B, C, D).

Die Achsen Y und Z der Düse können zum gezielten Ausrichten der LC-Polymermoleküle nach vorgenannten Bedingungen unabhängig von der Achse X in Extrusionsrichtung senkrecht oder in einem vorgegebenen Winkel und unter Änderung oder Beibehaltung des Querschnitts beim Fortschreiten in Extrusionsrichtung angeordnet werden, wobei vorzugsweise ihre relative Neige zueinander beim Fortschreiten in Extrusionsrichtung erhalten bleiben sollte.

Die Erfindung erlaubt das einstufige Herstellen von Platten, Filmen, Profilen und ähnlichen Formkörpern mit einachsiger Orientierungsrichtung, zweiachsigen oder auch dreiachsigen Orientierungsrichtungen (z. B. isotrop). Das erfindungsgemäße Verfahren erlaubt die Herstellung von Formteilen, in denen die Ketten überwiegend senkrecht zur Fließrichtung orientiert sind. Es ist nach dem erfindungsgemäßen Verfahren ebenfalls möglich, Formteile herzustellen, in denen die Ketten innerhalb einer Ebene statistisch in alle Richtungen verteilt sind.

Für das erfindungsgemäße Verfahren sind prinzipiell alle solche Kunststoffe geeignet, die starre und somit mesogene Gruppen in der Hauptkette besitzen, entweder ausschließlich oder in Verbindung mit flexibleren Gruppen, und die aus der flüssig-kristallinen Schmelze verarbeitet werden können. Für das

Verfahren sind solche Kunststoffe in reiner Form, in Form von Polymermischungen oder in Form von gefüllten Massen geeignet.

Als mesogene Gruppen können die aus der Literatur (s. H. Kelker, R. Hatz, Handbook of Liquid Crystals, Verlag Chemie, Weinheim, 1980) bekannten chemischen Struktureinheiten verwendet werden.

Geeignete thermotrope Polymere sind beispielsweise:

- Polyester,
- Polyestercarbonate,
- Polythiolester,
- Polyesteramide,
- Polyesterimide,
- Polyazomethine.

Bevorzugte thermotrope Polykondensate sind vollaromatische Polyester auf Basis von

a) aromatischen Dicarbonsäuren,
b) Diphenolen und gegebenenfalls
c) aromatischen Hydroxycarbonsäuren,

wobei das Molverhältnis von Resten einkondensierter aromatischer Dicarbonsäuren zu Resten einkondensierter Diphenole 0,95 bis 1,05 beträgt und die Reste einkondensierter aromatischer Hydroxycarbonsäuren 0 bis 100, vorzugsweise 30 bis 80, insbesondere 50 bis 70 Mol-%, bezogen auf einkondensierte Reste a) und c) ausmachen.

Aromatische Dicarbonsäuren a) sind alle Dicarbonsäuren, deren Carboxylgruppen unmittelbar an einen aromatischen Ring geknüpft sind.

Bevorzugte aromatische Dicarbonsäuren a) entsprechen der Formel

HOOC - A - COOH (1)

worin A einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit $n = 1$-$4$ verbundene Phenylenreste.

Bevorzugte aromatische Reste sind z.B. 1,4-Phenylen, 1,4-Naphthylen oder 4,4'-Biphenylen, worin die beiden Bindungen sich koaxial in entgegengesetzte Richtungen erstrecken, oder 1,5-Naphtylen, 2,6-Naphthylen oder 3,5'-Biphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4'-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren a) sind z.B. 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephtalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4'-dicarbonsäure, Diphenylether-3,4'-dicarbonsäure, 4-Methylisophthalsäure, 5-Methylisophthalsäure und Diphenylether-4,4'-dichlor-3,3'-dicarbonsäure.

Besonders bevorzugte aromatische Dicarbonsäuren a) sind Iso- und Terephthalsäure.

Bevorzugte Diphenole b) entsprechen der Formel

HO - Z - OH (II)

worin Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden. Für die Konstitution des Restes Z gilt das gleiche wie für den aromatischen Rest A oben beschrieben worden ist.

Besonders bevorzugte Diphenole b) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3', 5,5'-Tetramethyl-4,4'-dihydroxydiphenyl, 3,5'-Dimethoxy-4,4'-dihydroxydipheny-

lether, 1,2-(2-Chlor-4-hydroxyphenoxy)-ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Ganz besonders bevorzugte Diphenole b) sind Hydrochinon, Resorcin und 4,4'-Dihydroxydiphenyl.

Bevorzugte aromatische Hydroxycarbonsäuren c) sind z.B. Verbindungen der Formeln

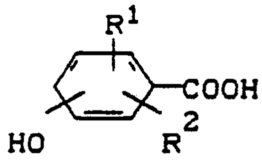

(III)

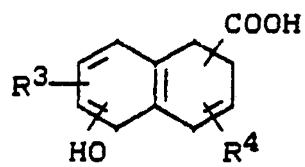

(IV)

worin

$R^1$ bis $R^4$ $C_1$-$C_4$-Alkyl, $C_1$-$C_4$-Alkoxy, $C_6$-$C_{10}$-Aryl oder -Aryloxy, $C_7$-$C_{12}$-Alkylaryl (vorzugsweise Benzyl), Halogen (vorzugsweise Chlor und Brom) oder Wasserstoff bedeuten und die Valenzen zwischen Kern und Hydroxylgruppe sowie zwischen Kern und Carboxylgruppe einen Winkel von 45 bis 180° bilden.

Besonders bevorzuge aromatische Hydroxycarbonsäuren c) sind z.B. 4-Hydroxy-3-methylbenzoesäure, 4-Hydroxy-3-phenylbenzoesäure,4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Methyl-3-hydroxybenzoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure.

Ganz besonders bevorzugte aromatische Hydroxycarbonsäuren c) sind unsubstituierte Hydroxycarbonsäuren, wie p-Hydroxybenzoesäure und 6-Hydroxy-2-naphthoesäure.

Nicht sämtliche Kombinationen der aufgezählten Ausgangsmaterialien ergeben thermotrope Polykondensate. Der Fachmann wird seine Auswahl jeweils anhand der oben zitierten Literatur treffen oder aber aufgrund seiner Erfahrung geeignete Kombinationen auswählen. Da die thermotropen Polykondensate an sich bekannt sind, kann eine längere Ausführung an dieser Stelle entfallen.

Als Endgruppen können die thermotropen Polyester COOH, -H, -OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol. β-Naphthol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponente a und b, eingesetzt werden.

Gegebenenfalls können auch verzweigende drei- oder höherfunktionelle - vorzugsweise aromatische - Monomere in Mengen von 0,1 bis 1 Mol-%, bezogen auf die Summe der Komponenten a und b, wie z.B. Phloroglucin, 1,3,5-Benzoltricarbonsäure und 3,5-Dihydroxybenzoesäure, eingesetzt werden.

Die thermotropen Polyester besitzen in der Regel eine inhärente Viskosität von mindestens 0,5, vorzugsweise von mindestens 1,0 dl/g (gemessen an einer Lösung von 5 mg Polyester/ml p-Chlorphenol bei 45° C). Sollten Polyester in p-Chlorphenol unlöslich sein, wird angenommen, daß sie die angegebene Mindestviskosität besitzen.

Die thermotropen Polyester besitzen vorzugsweise eine Schmelzviskosität von weniger als 1000 Pa.s, gemessen bei einer Schergeschwindigkeit von $10^3$ $sek^{-1}$ unter Verwendung einer Düse mit einem Länge/Durchmesserverhältnis von 20 bei einer Temperatur von weniger als 370° C, vorzugsweise weniger als 330° C.

Die thermotropen Polyester können nach verschiedenen Verfahren hergestellt werden, z.B. durch Kondensation bzw. Umesterung der reaktiven Derivate der Verbindungen (a) bis (d), z.B. ihrer Ester bzw. Säurechloride, und anschließende Polykondensation.

Beispiele für bevorzugte Ausgangsverbindungen sind ihre Arylester, ihre Acylester und ihre Säurechloride.

Nach einem bevorzugten Syntheseverfahren werden die niederen Acylester, vorzugsweise die Acetate, der Verbindungen (b) und (c) mit den Dicarbonsäuren (a) umgesetzt, wobei die Acylester auch in situ

herstellt werden können.

Diese Reaktionen können in der Schmelzphase durchgeführt werden, möglich ist jedoch auch die Reaktion in Gegenwart eines flüssigen wärmeüberleitenden Mediums, das einen hohen Siedepunkt hat.

Die Reste der Verbindungen (a) bis (c) werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titan tetrapropylat, Alkoxytitansilikate, Zirkoniumbutylate, Zirkoniumpropylate, Titantetraphenolat, Natriumphenolat, Germaniumdioxid, Antimontrioxid, Dialkyl- und Diarylzinnoxid, Di-butylzinn-diacetat, Di-butyl-dimethoxy-zinn. Besonders bevorzugte sind Magnesium-, Mangan-, Natrium-, Kalium- und Zinkacetat.

Die Katalysatormengen betragen vorzugsweise 0,001 bis 1, insbesondere 0,01 bis 0,2, Gew.-%, bezogen auf das Gesamtgewicht der eingesetzten Monomeren.

Die thermotropen Polyester können bei Temperaturen von 160 bis 370 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - vorzugsweise in Granulatform - einer Festphasennachkondensation unter vermindertem Druck bei Temperaturen von 200 bis 300 °C unterworfen werden; nach 1 bis 25 Stunden haben sich Molekulargewicht erhöht und die daraus resultierenden Eigenschaften des Polyesters merklich verbessert.

Das erfindungsgemäße Verfahren wird normalerweise in einem Temperaturbereich zwischen 20 und 450 °C durchgeführt. Die exakte Temperatur richtet sich jeweils nach dem verwendeten thermotropen Polymeren. Es ist wesentlich, daß das jeweilige Polymer bei der Verarbeitung vollständig cder partiell eine flüssig-kristalline Schmelsphase ausbildet. Bevorzugte Verarbeitungstemperaturen liegen im Bereich von 200 bis 400 °C.

Beispiele

Herstellung des thermotropen Polyesters:

a) In einen beheizbaren 25 l-Kessel aus V4 A-Stahl mit Rührer, Stickstoffeinleitung und Destillationsaufsatz wurden die folgenden Substanzen eingefüllt:

31,2 Mol ≙ 4309 g p-Hydroxybenzoesäure
14,4 Mol ≙ 2392 g Isophthalsäure
2,4 Mol ≙ 399 g Terephthalsäure
14,4 Mol ≙ 1586 g Hydrochinon
2,4 Mol ≙ 447 g 4,4'-Dihydroxydiphenyl
76,8 Mol ≙ 7841 g Acetanhydrid
5 g Magnesiumacetat
2 g $GeO_2$

Nach dreimaligem Evakuieren und anschließendem Belüften mit Stickstoff wurde der Kessel auf 170 °C aufgeheizt. Dabei wurde Stickstoff mit einer Durchflußgeschwindigkeit von 20 l/h übergeleitet. nach 2,5 Stunden bei 170 °C wurde die Temperatur innerhalb von 30 Minuten auf 200 °C erhöht, anschließend innerhalb von 1,5 Stunden auf 250 °C, dann innerhalb von 1,5 Stunden weiter auf 300 °C. Bei 300 °C wurde zunächst ca. 1 Stunde bei Normaldruck gehalten und dann der Druck im Verlauf von 1,5 Stunden bis auf 20 mbar erniedrigt. Der Kessel wurde mit Stickstoff belüftet, das Produkt durch ein Bodenventil herausgedrückt und granuliert.

Das so isolierte hell-beige Produkt wurde im Vakuum (ca. 1 mbar) bei 240 °C in fester Phase

nachkondensiert (24 h).

Die inhärente Viskosität des Polyesters betrug 1,4 dl/g. Im Bereich von 310 °C bis 400 °C bildete das Produkt eine optisch anisotrope Schmelzphase.

Zur Prüfung der mechanischen Eigenschaften wurden aus dem Polyester durch Spritzguß Biege- und Zugstäbe hergestellt. Folgende Werte wurden (nach DIN) gemessen:
Biegefestigkeit: 200 MPa
Biege-E-Modul: 11,1 GPa
Zugfestigkeit: 188 MPa
Zug-E-Modul: 23,8 GPa
b) Es wird eine Vorrichtung eingesetzt, bei der die Extrusion in X-Richtung verläuft und eine Dehnung in X- und Y-Richtung erfolgen soll
Als Form wurde gewählt:
Q(x) = B exp(-Ax)
Dehnung in X-Richtung
b(x) = D exp (Cx)
Dehnung in Y-Richtung
Die Eintrittsöffnung der Düse war im Beispiel rechteckig:
$b(o) = b_o = 5$ mm
$c(o) = c_o = 50$ mm,
wobei die Richtungen X, Y und Z jeweils senkrecht aufeinander standen.
Die Austrittsöffnung der Düse war im Beispiel ebenfalls rechteckig, die gegenseitige Lage der Achsen blieb unverändert
$b(d) = b_d = 50$ mm
$c(d) = c_d = 1$ mm
wobei d = Düsenlage (50 mm).
Die Gestalt der Wände war folglich gegeben durch

$$b(x) = b_o \exp\left( \frac{A\,x}{d} \right) \quad A = \ln \frac{b_d}{b_o} = 2{,}30$$

$$c(x) = c_o \exp\left( \frac{B\,x}{d} \right) \quad B = \ln \frac{c_d}{c_o} = -3{,}91.$$

c) Ein Göttfert-Extrusiometer (Zylinder Ø 20 x 20 D) wurde mit der unter Punkt b) geschriebenen Düse (0,5 x 50 mm) ausgerüstet. Bei einer Zylindertemperatur von 340 °C und einem Druck von 140 bar wurde der thermotrope Polyester extrudiert. Die Extrusionsgeschwindigkeit betrug dabei 2 m/min. Aus dem so extrudierten Film wurden Teststreifen mit einer Breite von 5 mm und einer Länge von 20 mm ausgeschnitten. Auf einem "Instron"-Meßgerät wurden der Zug-E-Modul und die Zugfestigkeit der Streifen geprüft. An einem Testsegment, das in Extrusionsrichtung ausgeschnitten wurde, wurden die folgenden Werte gemessen:
Zug-E-Modul: 8 400 MPa
Zugfestigkeit: 210 MPa
Senkrecht zur Extrusionsrichtung ergaben sich die folgenden Werte:
Zug-E-Modul: 6 900 MPa
Zugfestigkeit: 180 MPa
In weiteren Versuchen wurde unter Verwendung der in Beispiel 1 beschriebenen Extrusionsapparatur mit der beschriebenen Düse eine Reihe weiterer Filme extrudiert. Die Ergebnisse der mechanischen Untersuchungen sind in Tabelle 1 zusammengefaßt.

Tabelle 1

| Versuch | Zylinder-temperatur (°C) | Druck (bar) | Extrusions-geschwindigk. (m/min) | Zugfestigkeit (MPa) ER | Zugfestigkeit (MPa) SR | Zug-E-Modul (MPa) ER | Zug-E-Modul (MPa) SR |
|---|---|---|---|---|---|---|---|
| 2 | 320 | 280 | 1 | 160 | 172 | 7900 | 8100 |
| 3 | 320 | 200 | 0,6 | 195 | 180 | 9000 | 7900 |
| 4 | 340 | 180 | 3 | 260 | 210 | 8400 | 8000 |
| 5 | 340 | 110 | 1,5 | 240 | 230 | 9300 | 9700 |
| 6 | 340 | 90 | 1 | 300 | 220 | 10300 | 8900 |
| 7 | 360 | 110 | 5 | 410 | 280 | 12400 | 10200 |
| 8 | 360 | 70 | 2 | 360 | 310 | 13400 | 11100 |

## Patentansprüche

1. Verfahren zur Herstellung von Teilen aus thermotropen flüssig-kristallinen Kunststoffen mit definierter Orientierung der LC-Polymermoleküle in mindestens zwei voneinander unabhängigen Vorzugsrichtungen, indem der thermoplastische Massestrom durch eine Düse extrudiert wird und die LC-Polymermoleküle mittels der über die Form der Begrenzungsflächen der Düse aufgeprägten Kräfte ausgerichtet werden, dadurch gekennzeichnet, daß der Querschnitt Q(x) der Düse gemäß der Funktion

$Ax^n + B$

mit $0 \leq n \leq 10$ und A bzw. B = Konstanten (Geometrieparameter)
in Fließrichtung x des Massestroms vergrößert oder verkleinert wird.

2. Verfahren nach Anspruch 1, dadurch gekennzeichnet, daß n Werte zwischen 0,5 und 5 annimmt.

3. Verfahren zur Herstellung von Teilen aus thermotropen flüssig-kristallinen Kunststoffen mit definierter Orientierung der LC-Polymermoleküle in mindestens zwei voneinander unabhängigen Vorzugsrichtungen, indem der thermoplastische Massestrom durch eine Düse extrudiert wird und die LC-Polymermoleküle mittels der über die Form der Begrenzungsflächen der Düse aufgeprägten Kräfte ausgerichtet werden, dadurch gekennzeichnet, daß der Querschnitt Q(x) der Düse gemäß der Funktion

$B \exp(+Ax)$

mit A bzw. B = Konstanten (Geometrieparameter)
in Fließrichtung x vergrößert oder verkleinert wird.

4. Verfahren nach den Ansprüchen 1 bis 3, dadurch gekennzeichnet, daß die lineare Dimension B(x) einer der Querabmessungen des Querschnitts gemäß einer der Funktionen:

$$\sqrt{Cx+D},$$
$$\ln(Cx+D) \text{ oder}$$
$$D \exp(Cx)$$

mit C und D = Konstanten (Geometrieparameter)
in Fließrichung x vergrößert oder verkleinert wird und die zweite lineare Dimension der Querschnittsabmessung c(x) durch:

$c(x) = Q(x)/b(x)$

festgelegt wird.

5. Verfahren nach Ansprüchen 1 bis 4, dadurch gekennzeichnet, daß die Düseneintrittsöffnung rund, oval, rechteckig, schiefwinklig oder geometrisch stärker gegliedert ist.

6. Verfahren nach Ansprüchen 1 bis 5, dadurch gekennzeichnet, daß die Düsenaustrittsöffnung rund, oval, rechteckig, schiefwinklig oder geometrisch stärker gegliedert ist.

7. Verfahren nach Ansprüchen 1 bis 5, dadurch gekennzeichnet, daß die relativen Lagen der Achsen 1, 2 und 3 beim Fortschreiten in Extrusionsrichtung konstant bleiben.

8. Verfahren nach Ansprüchen 1 bis 6, dadurch gekennzeichnet, daß sich die relativen Lagen der Achsen 1, 2 und 3 beim Fortschreiten in Extrusionsrichtung ändern.

9. Verfahren nach Ansprüchen 1 bis 8 , dadurch gekennzeichnet, daß thermotrope flüssig-kristalline Polyester verwendet werden, die einen oder mehrere der folgenden Bausteine enthalten:

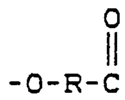, $-O-R'-O-$, 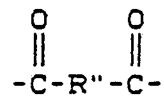

wobei R, R' und R" aromatrische Reste der allgemeinen Formel

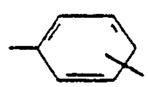 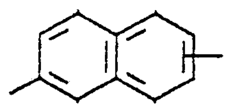 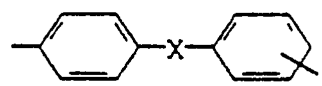

mit x = S, O, 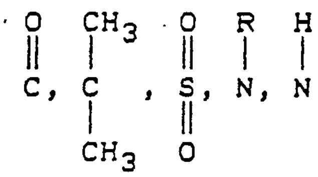 Einfachbindung

etc. bedeuten.

10. Verfahren nach Ansprüchen 1 bis 8, dadurch gekennzeichnet, daß Mischungen (ein- oder mehrphasig) aus thermotropen flüssig-kristallinen Polymeren und anderen Polymeren verwendet werden.

11. Verfahren nach Ansprüchen 1 bis 10, dadurch gekennzeichnet, daß die Verarbeitung aus thermotroper Phase erfolgt.

12. Verfahren nach Ansprüchen 1 bis 10, dadurch gekennzeichnet, daß die Verarbeitung aus isotroper Schmelzphase erfolgt.

## Claims

1. A process for the production of parts of thermotropic liquid crystalline plastics having a defined orientation of the LC polymer molecules in at least two preferential directions independent of one another by extrusion of the thermoplastic melt stream through a nozzle and orientation of the LC polymer molecules under the effect of the forces applied through the shape of the boundary surfaces of the nozzle, characterized in that the cross-section Q(x) of the nozzle is increased or reduced in the direction of flow x of the melt stream in accordance with the function

   $Ax^n + B$

   with $0 \leqq n \leqq 10$ and A and B = constants (geometric parameters).

2. A process as claimed in claim 1, characterized in that n assumes values of 0.5 to 5.

3. A process for the production of parts of thermotropic liquid crystalline plastics having a defined orientation of the LC polymer molecules in at least two preferential directions independent of one another by extrusion of the thermoplastic melt stream through a nozzle and orientation of the LC polymer molecules under the effect of the forces applied through the shape of the boundary surfaces of the nozzle, characterized in that the cross-section Q(x) of the nozzle is increased or reduced in the direction of flow x of the melt stream in accordance with the function

   $B \exp(+Ax)$

   where A and B = constants (geometric parameters).

4. A process as claimed in claims 1 to 3, characterized in that the linear dimension B(x) of one of the transverse dimensions of the cross-section is increased or reduced in the direction of flow x in

accordance with one of the functions:

$$\sqrt{Cx+D},$$
$$\ln(Cx+D) \text{ or}$$
$$D \exp(Cx)$$

where C and D = constants (geometric parameters)
and the second linear dimension of the cross-sectional dimension c(x) is determined by:

$c(x) = Q(x)/b(x)$

5. A process as claimed in claims 1 to 4, characterized in that the nozzle inlet opening is round, oval, rectangular, oblique-angled or of a higher geometric order.

6. A process as claimed in claims 1 to 5, characterized in that the nozzle outlet opening is round, oval, rectangular, oblique-angled or of a higher geometric order.

7. A process as claimed in claims 1 to 6, characterized in that the relative positions of the axes 1, 2 and 3 remain constant during the advance in the extrusion direction.

8. A process as claimed in claims 1 to 6, characterized in that the relative positions of the axes 1, 2 and 3 change during the advance in the extrusion direction.

9. A process as claimed in claims 1 to 8, characterized in that thermotropic liquid crystalline polyesters containing one or more of the following units

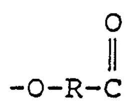 , 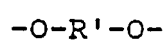 , 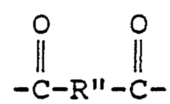

in which R, R' and R" are aromatic radicals corresponding to the general formulae

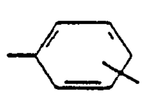
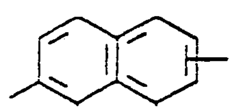
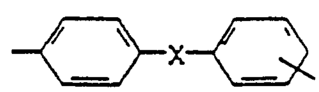

with x = S, O, 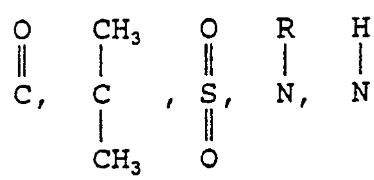 single bond, etc.,

are used.

10. A process as claimed in claims 1 to 8, characterized in that (single- or multiphase) mixtures of thermotropic liquid crystalline polymers and other polymers are used.

11. A process as claimed in claims 1 to 10, characterized in that the melt is processed from a thermotropic phase.

12. A process as claimed in claims 1 to 10, characterized in that the melt is processed from an isotropic phase.

**Revendications**

1. Procédé pour la fabrication d'éléments en résines synthétiques thermotropes à cristaux liquides à orientation définie des molécules de polymères à cristaux liquides dans au moins deux directions préférentielles indépendantes l'une de l'autre par extrusion du courant de masse thermoplastique au travers d'une filière et orientation des molécules de polymères à cristaux liquides sous l'action des forces exercées en raison de la forme des surfaces limites de la filière, caractérisé en ce que la section Q(x) de la filière est accrue ou diminuée dans la direction d'écoulement x du courant de la masse d'après la fonction

   $Ax^n + B$

   dans laquelle $0 \leq n \leq 10$ et A et B = constantes (paramètres de la géométrie).

2. Procédé selon la revendication 1, caractérisé en ce que n prend des valeurs de 0,5 à 5.

3. Procédé pour la fabrication de pièces en résines synthétiques thermotropes à cristaux liquides à orientation définie des molécules de polymères à cristaux liquides dans au moins deux directions préférentielles indépendantes l'une de l'autre par extrusion du courant de masse thermoplastique au travers d'une filière et orientation des molécules de polymères à cristaux liquides sous l'action des forces exercées en raison de la forme des surfaces limites de la filière, caractérisé en ce que la section Q(x) de la filière est accrue ou diminuée dans la direction d'écoulement x d'après la fonction

   $B \exp(+Ax)$

   dans laquelle A et B = constantes (paramètres de la géométrie).

4. Procédé selon les revendications 1 à 3, caractérisé en ce que la dimension linéaire B(x) de l'une des mesures transversales de la section est accrue ou diminuée dans la direction d'écoulement x d'après l'une des fonctions

   $$\sqrt{Cx+D},$$
   $$\ln(Cx+D) \text{ ou}$$
   $$D \exp(Cx)$$

   dans lesquelles C et D = constantes (paramètres de la géométrie)
   et la deuxième dimension linéaire de mesure de section c(x) est donnée par

   $c(x) = Q(x)/b(x)$

5. Procédé selon les revendications 1 à 4, caractérisé en ce que l'orifice d'entrée de la filière est circulaire, ovale, rectangulaire, à angles obliques ou présente une forme géométrique encore plus fortement découpée.

6. Procédé selon les revendications 1 à 5, caractérisé en ce que l'orifice de sortie de la filière est circulaire, ovale, rectangulaire, à angles obliques ou présente une forme géométrique encore plus fortement découpée.

7. Procédé selcn les revendications 1 à 6, caractérisé en ce que, à l'avance dans la direction d'extrusion, les positions relatives des axes 1, 2 et 3 restent constantes.

8. Procédé selon les revendications 1 à 6, caractérisé en ce que, à l'avance dans la direction d'extrusion, les positions relatives des axes 1, 2 et 3 changent.

9. Procédé selon les revendications 1 à 8, caractérisé en ce que l'on utilise des polyesters thermotropes à cristaux liquides contenant un ou plusieurs des motifs de structure suivants :

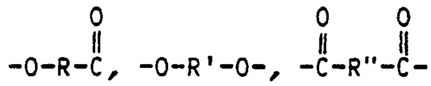

dans lesquels R, R' et R" représentent des radicaux aromatiques de formule générale

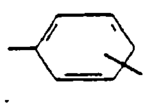
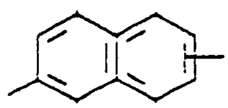
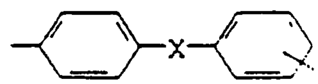

avec x = S, O, 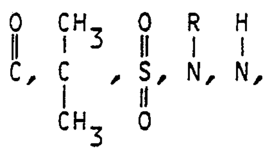 liaison simple.

10. Procédé selon les revendications 1 à 8, caractérisé en ce que l'on utilise des mélanges (à une ou plusieurs phases) de polymères thermotropes à cristaux liquides et d'autres polymères.

11. Procédé selon les revendications 1 à 10, caractérisé en ce que le façonnage est réalisé en phase thermotrope.

12. Procédé selon les revendications 1 à 10, caractérisé en ce que le façonnage est réalisé en phase fondue isotrope.